# FASCICULE DE BREVET EUROPEEN

(11) **EP 0 965 472 B1**
(45) Date de publication et mention de la délivrance du brevet: **28.12.2005**
(21) Numéro de dépôt: 99401405.8
(22) Date de dépôt: 10.06.1999
(51) Int. Cl.: B60J 10/00, B60J 10/04, C03C 27/04

(54) **Vitrage automobile à surface structurée dans la zone périphérique**
Fahrzeugverglasung mit Oberflächenstruktur im Randbereich
Vehicle glazing with surface structure on the peripheral area

(30) Priorité: 18.06.1998 DE 19827076
(43) Date de publication de la demande: 22.12.1999
(73) Titulaire: SAINT-GOBAIN GLASS FRANCE, 92400 Courbevoie (FR)
(72) Inventeur: Hahn, Dieter, 52531 Ubach-Palenberg (DE)
(74) Mandataire: Goldenberg, Virginie Isabelle

(56) Documents cités:
- EP-A- 0 299 672
- EP-A- 0 908 867
- US-A- 5 484 467

## Description

La présente invention concerne un vitrage automobile présentant une zone périphérique qui coopère au moins par endroits avec un élément d'étanchéité. En l'occurrence, le vitrage automobile peut être monté aussi bien de manière fixe que de manière mobile ou à coulissement.

L'élément d'étanchéité doit rendre la baie de la fenêtre étanche au vent, à la pluie et au bruit lorsque la fenêtre est fermée. La force d'adhérence entre un vitrage automobile mobile et l'élément d'étanchéité ne peut pas être trop élevée, afin que la force initiale nécessaire pour ouvrir et fermer la fenêtre soit aussi faible que possible.

Une force d'adhérence trop élevée peut cependant également provoquer des bruits de grincement et de craquement en raison de déplacements relatifs entre le vitrage automobile et l'élément d'étanchéité. Les bruits sont provoqués par des vibrations de frottement autoexcitées, qui sont également connues sous le nom de "effet d'adhérence-glissement", et prennent naissance lors du glissement de surfaces lisses telles que des vitres sur des matériaux élastiques tels que des joints d'étanchéité. Les déplacements relatifs sont produits par des torsions de carrosserie, à vitesse élevée, par l'action d'aspiration au niveau du vitrage automobile ou, pour les vitrages mobiles, par l'ouverture et la fermeture.

est décrit dans le document DE 3 435 469 A1. Pour sa fabrication, un apprêt caoutchouté est appliqué sur la surface d'une base en caoutchouc, est durci puis une peinture polyuréthanne thermodurcissable est appliquée sur la surface de l'apprêt.

Dans le document DE 4 331 790 C2, est décrit un élément d'étanchéité construit en forme de latte profilée creuse, qui est relié à un absorbeur ou amortisseur de vibrations afin d'éviter les bruits de grincement.

La fabrication de tels éléments d'étanchéité est relativement complexe et, par conséquent, sujette à défauts et coûteuse.

Le but de l'invention est de procurer un autre moyen d'éviter de trop grandes forces d'adhérence et l'apparition de bruits au moyen d'un élément d'étanchéité simple.

Ce but est atteint par le fait que la surface du vitrage automobile est, au moins dans la zone périphérique de contact avec l'élément d'étanchéité, pourvue d'une structure transparente destinée à créer un grand nombre de surfaces de contacts localement limitées entre l'élément d'étanchéité et le vitrage automobile.

La structure de surface suivant l'invention sur le vitrage automobile est de préférence appliquée par sérigraphie, c'est-à-dire qu'on imprime une peinture céramique à cuire et qu'on la cuit ensuite. Il s'est avéré qu'un motif de points possède la meilleure efficacité comme structure de surface pour diminuer le frottement d'adhérence. Il est cependant également possible de produire une structure de surface appropriée à l'aide d'autres procédés, sous la forme d'empreintes formées dans la surface du verre, par exemple par ponçage, attaque chimique ou usinage par laser.

On connaît de manière générale des vitrages automobiles qui sont imprimés au niveau de la zone périphérique à l'aide d'une peinture céramique cuite opaque entièrement étanche, mais la fonction de cette impression se limite au masquage d'éléments de fixation, à la protection d'un cordon de colle contre le rayonnement U.V. du soleil ou à des buts purement décoratifs.

L'impression suivant l'invention d'un vitrage automobile à l'aide d'une peinture céramique à cuire structurée transparente ou la structure de surface produite de la manière déjà évoquée plus haut n'est pas prévue dans cette option. En cas de structuration selon l'invention de la surface du revêtement structure de surface produite de la manière déjà évoquée plus haut n'est pas prévue dans cette option. En cas de structuration selon l'invention de la surface du revêtement ou du bord du vitrage, on diminue le frottement entre le vitrage et l'élément d'étanchéité. Cet effet est probablement à mettre sur le compte du fait que les forces de pressage agissant à plat normalement sur l'ensemble de la surface de contact entre l'élément d'étanchéité et le vitrage automobile sont réparties par l'utilisation suivant l'invention d'une structure de surface sur un grand nombre de surfaces de contact localement limitées. L'élément d'étanchéité élastique ne suivra directement les mouvements relatifs par rapport au verre que dans des zones partielles, à savoir sur lesdites surfaces de contact localement limitées, et, dans un premier temps, ne s'y opposera pas avec la rigidité de son volume total. L'établissement des tensions élastiques, dont l'élimination produit les bruits, est de la sorte empêché ou du moins fortement réduit.

Le grand nombre de surfaces de contact localement limitées doit, comme avant, assurer une étanchéité suffisante de l'interstice entre la vitre et le joint d'étanchéité, par exemple par un échelonnement approprié sur l'ensemble de la zone d'étanchéité.

Le vitrage automobile suivant l'invention offre l'avantage que sa structure de surface peut être réalisée à l'aide de procédés connus et éprouvés, par exemple par sérigraphie. Les installations de sérigraphie sont habituellement présentes dans les chaînes de fabrication pour vitrages automobiles, de sorte que des investissements supplémentaires ne sont pas nécessaires. Les mesures coûteuses prises pour obtenir une diminution de l'adhérence de frottement au niveau des éléments d'étanchéité peuvent être entièrement ou partiellement supprimées.

L'impression selon un motif de points s'est avérée particulièrement avantageuse lorsque le rapport entre les surfaces imprimée et non imprimée se situe entre 30% et 90%. Le diamètre des points répartis en plusieurs rangées se situe entre 0,3 et 5 mm. Par motif de points, on entend également des géométries de motif qui ne comportent pas des points circulaires, mais par exemple des points carrés.

Les structures imprimées ont une épaisseur d'environ 10 µm à 35 µm. De la sorte, on garantit que l'élément d'étanchéité puisse entrer en contact direct avec la vitre également entre les différents points, de minuscules interstices apparaissant au niveau des transitions entre les surfaces imprimées et non imprimées, lesquelles interrompent la surface de contact entre le joint d'étanchéité et le verre ou l'impression.

Si la surface du verre est elle-même structurée de la manière précédemment mentionnée, une profondeur de pénétration correspondant à l'épaisseur de structure mentionnée ci-dessus est suffisante pour les empreintes.

Au lieu d'un motif de points, il est naturellement également possible d'appliquer une structure de lignes. Le cas échéant, afin de développer l'effet suivant l'invention, la structure de lignes a par exemple la forme de hachures orientées en oblique par rapport à la direction de déplacement relatif entre le vitrage automobile et l'élément d'étanchéité.

La structure de surface recherchée servant à décomposer la surface de contact entre le joint d'étanchéité et la surface vitrée peut en principe également être obtenue par une impression de surface suffisamment rugueuse. Bien que des impressions de surface connues soient également faiblement plus rugueuses que la surface du verre, elles ne peuvent cependant pas provoquer l'effet suivant l'invention.

La perceptibilité optique de la structure de surface peut au besoin être minimisée par une impression hautement transparente ou un traitement de surface de qualité particulièrement élevée des empreintes réalisées dans la surface du verre.

Un exemple de réalisation d'un vitrage automobile suivant l'invention sera décrit en détail ci-après à l'aide des dessins.

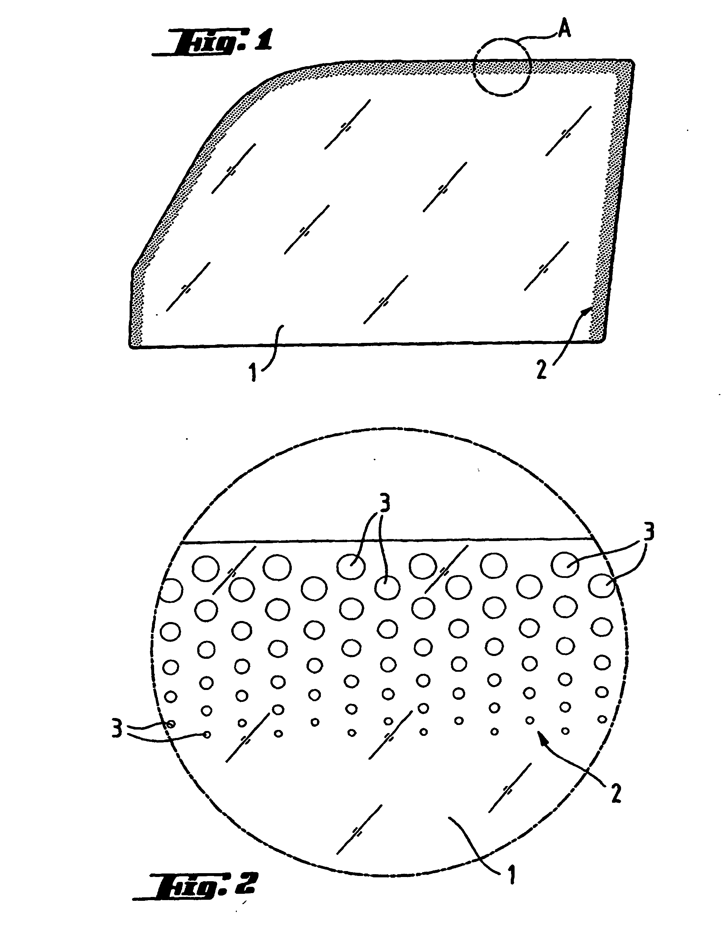

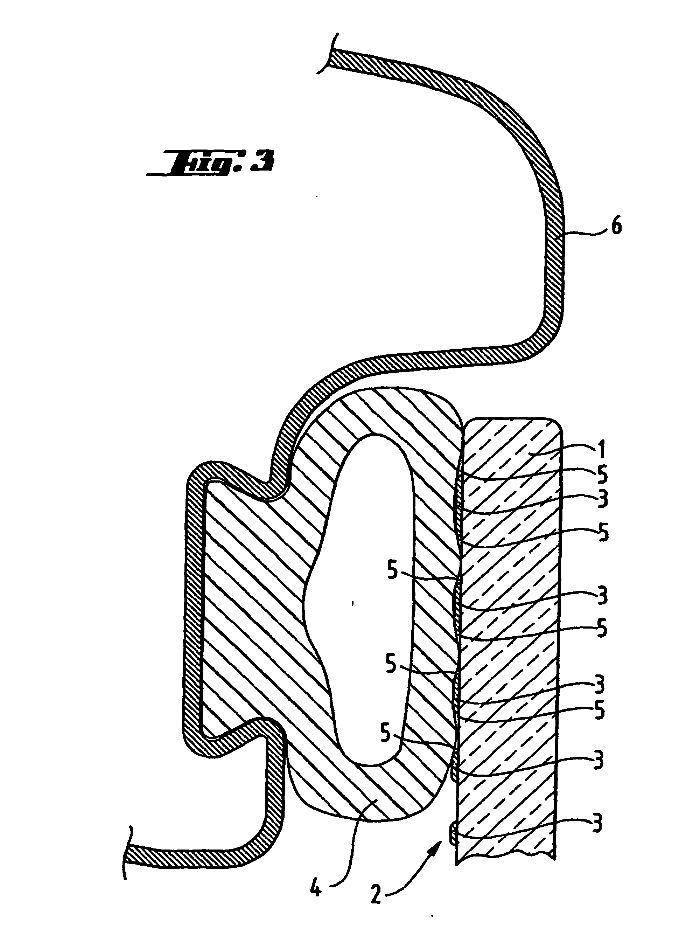

Les dessins montrent de manière schématique :
■ figure 1 : une vue en plan d'un vitrage automobile suivant l'invention ayant la forme d'une vitre manoeuvrée à la main ;
■ figure 2 : une partie à plus grande échelle A de la figure 1, et
■ figure 3 : une vue en coupe transversale correspondant à la figure 2 afin de faire mieux ressortir la coopération entre l'élément d'étanchéité et la vitre.

A la figure 1 est représentée une vitre manoeuvrée à la main 1 dont les zones périphériques aux bords latéraux et au bord supérieur présentent une structuration 2 imprimée sous la forme d'un réseau de points 3. Ces zones viennent au moins partiellement en contact avec des éléments d'étanchéité.

La figure 2 montre la partie A de la figure 1 à plus grande échelle. Les points 3 ont été appliqués par sérigraphie et se composent d'une peinture céramique à cuire sans pigments, donc uniquement de fondant, et sont par conséquent transparents. La peinture céramique à cuire est cuite à des températures d'environ 630°C durant le traitement ultérieur de transformation de la vitre manoeuvrée à la main en verre de sécurité trempé. Le fondant utilisé résiste aux eaux de condensation. Le motif de points choisis évolue vers le milieu de la vitre vers des points de plus en plus petits.

A la figure 3 est représentée en vue en coupe la coopération d'un élément d'étanchéité 4 avec la structuration 2, qui constitue la structure de surface sur la vitre manoeuvrée à la main 1. L'élément d'étanchéité 4 est fixé à la carrosserie 6 du véhicule via une liaison à emboîtement. Il convient de noter que l'élément d'étanchéité élastique 4 est en contact avec la vitre manoeuvrée à la main 1 à la fois au niveau des points transparents imprimés et cuits 3 de la structure de surface 2 et au niveau des zones situées entre les points 3. De petits interstices 5 créent des surfaces discontinues. De cette façon, l'élément d'étanchéité élastique 4 ne participe que dans des zones partielles par frottement d'adhérence aux mouvements relatifs dans la surface de contact. De la sorte, les forces de pression sont réparties inégalement sur les surfaces de recouvrement de la vitre manoeuvrée à la main 1 et de l'élément d'étanchéité 4. Un "effet d'adhérence-glissement" ne peut pas intervenir, c'est-à-dire que l'on évite fortement ou que l'on réduit fortement au moins les vibrations de frottement autoexcitées produites par l'établissement de tensions élastiques, dont l'élimination produit des bruits indésirables.

## Revendications

1. Vitrage automobile comportant une zone périphérique qui coopère au moins par endroits avec un élément d'étanchéité, **caractérisé en ce que** la surface du vitrage automobile (1) est pourvue au moins dans la zone périphérique de contact avec l'élément d'étanchéité (4) d'une structuration transparente (2) afin d'établir un grand nombre de surfaces de contact localement limitées entre l'élément d'étanchéité (4) et le vitrage automobile (1).

2. Vitrage automobile suivant la revendication 1, **caractérisé en ce que** la structuration (2) est constituée d'une peinture céramique à cuire transparente.

3. Vitrage automobile suivant la revendication 1 ou la revendication 2, **caractérisé en ce que** la structuration (2) est réalisée à partir d'un matériau d'impression appliqué par sérigraphie.

4. Vitrage automobile suivant la revendication 1, **caractérisé en ce que** la structuration (2) est constituée d'empreintes formées dans la surface du vitrage automobile.

5. Vitrage automobile suivant l'une des revendications précédentes, **caractérisé en ce que** la structuration (2) est constituée d'un réseau de points (3).

6. Vitrage automobile suivant l'une des revendications précédentes 1 à 4, **caractérisé en ce que** la structuration est constituée d'une structure de lignes.

## Patentansprüche

1. Autoglasscheibe mit einem Randbereich, der wenigstens abschnittweise mit einem Dichtungselement zusammenwirkt, **dadurch gekennzeichnet, dass** die Oberfläche der Autoglasscheibe (1) wenigstens im randseitigen Kontaktbereich mit dem Dichtungselement (4) mit einer transparenten Strukturierung (2) zum Herstellen einer Vielzahl von lokal begrenzten Kontaktflächen zwischen dem Dichtungselement (4) und der Autoglasscheibe (1) versehen ist.

2. Autoglasscheibe nach Anspruch 1, **dadurch gekennzeichnet, dass** die Strukturierung (2) aus einer transparenten keramischen Einbrennfarbe besteht.

3. Autoglasscheibe nach Anspruch 1 oder 2, **dadurch gekennzeichnet, dass** die Strukturierung (2) aus einem mit Hilfe des Siebdruckverfahrens aufgebrachten Druckmaterials hergestellt wird.

4. Autoglasscheibe nach Anspruch 1, **dadurch gekennzeichnet, dass** die Strukturierung aus in die Oberfläche der Autoglasscheibe eingearbeiteten Vertiefungen besteht.

5. Autoglasscheibe nach einem der vorstehenden Ansprüche, **dadurch gekennzeichnet, dass** die Strukturierung (2) aus einem Punkraster (3) besteht.

6. Autoglasscheibe nach einem der vorstehenden Ansprüche 1 bis 4, **dadurch gekennzeichnet, dass** die Strukturierung aus einer Linienstruktur besteht.

## Claims

1. Motor-vehicle window having a peripheral region which engages, at least in places, with a sealing element, **characterized in that** the surface of the motor-vehicle window (1) is provided, at least in the peripheral region of contact with the sealing element (4), with a transparent structurization (2) so as to establish a large number of locally limited areas of contact between the sealing element (4) and the motor-vehicle window (1).

2. Motor-vehicle window according to Claim 1, **characterized in that** the structurization (2) consists of a fireable ceramic paint, which is transparent.

3. Motor-vehicle window according to Claim 1 or Claim 2, **characterized in that** the structurization (2) is produced using a printing material applied by screen printing.

4. Motor-vehicle window according to Claim 1, **characterized in that** the structurization (2) consists of impressions formed in the surface of the motor-vehicle window.

5. Motor-vehicle window according to one of the preceding claims, **characterized in that** the structurization (2) consists of a pattern of dots (3).

6. Motor-vehicle window according to one of the preceding Claims 1 to 4, **characterized in that** the structurization consists of a structure of lines.
